# EUROPEAN PATENT APPLICATION

(11) **EP 4 716 083 A1**
(43) Date of publication of application: **25.03.2026**
(21) Application number: 24201046.0
(22) Date of filing: 18.09.2024
(51) Int. Cl.: H02M 1/14, H02M 3/156, H02M 1/12, B60H 1/00, H02M 1/36

(54) **ELECTRICAL SYSTEMS AND METHODS**

(71) Applicant: Thermo King LLC, Minneapolis, MN 55420 (US)
(72) Inventor: CONNEELY, Peadar, Galway (IE)
(74) Representative: Haseltine Lake Kempner LLP

(57) **Abstract**

The present disclosure relates to an electrical system 100 comprising an active power converter 130, a filter 140, a DC power supply network 110 and a controller 139. The filter 140 has a cutoff frequency 322. The controller 139 is configured to control the active power converter 130 based on a control logic 200 having a corner frequency 324. The corner frequency 324 is equal to or greater than the cutoff frequency 322. The present disclosure further relates to a method 400 of tuning a control logic 200 of a controller 139 configured to control a power converter 130 coupled to a DC power supply network 110, the method 400 comprising adjusting 420 a gain of the control logic 200 to reduce voltage oscillations on the DC power supply network 110 below a cutoff frequency 322 of the filter 140.

## Description

### FIELD OF THE INVENTION

The present invention relates to an electrical system comprising an active power converter, a filter, a DC power supply network, and a controller. The present invention also relates to a method of tuning a control logic of a controller configured to control a power converter forming part of an electrical system.

### BACKGROUND OF THE INVENTION

Conventionally, a float charge may be applied when a battery has reached a defined percentage of a nominally full charge to maintain the battery at maximum capacity throughout a service life of the battery. The float charge is intended to counteract self-discharge effects and assist in maintaining the battery at full charge. However, if the battery is subject to a ripple current (e.g., due to the action of a load) which is relatively large, the float charge may be unable to serve its intended function and the health and/or performance of the battery may be adversely affected. In particular, the ripple current may result in small-amplitude cyclical charging and discharging of the battery (referrable to as micro-cycling), which is associated with degradation of the battery. Further, due to charging inefficiencies, each cycle of charging and discharging may result in lower levels of charging than discharging. As a result, long-term reduction/deterioration (e.g., walk-down) in the state of charge and/or state of health of the battery may occur.

It is desirable to mitigate the potential adverse effects of a battery being subject to a ripple current. The present invention has been devised with the foregoing in mind.

### BRIEF SUMMARY OF THE INVENTION

According to a first aspect, there is provided an electrical system comprising: an active power converter; a filter having a cutoff frequency; a DC power supply network; and a controller configured to control the active power converter based on a control logic having a corner frequency; wherein the active power converter and the filter are electrically couped to the DC power supply network; and wherein the corner frequency is equal to or greater than the cutoff frequency.

It may be that the filter is configured to attenuate voltage oscillations on the DC power supply network above the cutoff frequency by at least 3 decibels. It may be that the filter is a passive filter. The filter may be a low-pass filter. The filter may be a band-rejection filter formed of a combination of a low-pass filter and a high-pass filter.

The cutoff frequency may be at least 50 hertz or at least 300 hertz.

It may be that the corner frequency is no more than 400 hertz greater than, or no more than 200 hertz greater than, the cutoff frequency.

The control logic may include a proportional gain and an integral gain. It may be that the control logic does not include a derivative gain.

The electrical system may further comprise a port configured to be coupled to an external cable. The active power converter may be coupled between the port and the DC power supply network.

The electrical system may further comprise a load. The load may be coupled to the DC power supply network via the filter. It may be that the load includes an engine electronic control unit or a fuel pump.

The electrical system may further comprise a starter motor for a prime mover. The starter motor may be coupled to the DC power supply network.

The electrical system may further comprise an energy storage device electrically coupled to the DC power supply network. The energy storage device may include a battery.

According to a second aspect there is provided a transport refrigeration system comprising an electrical system in accordance with the first aspect.

According to a third aspect there is provided a vehicle comprising an electrical system in accordance with the first aspect or a transport refrigeration system in accordance with the second aspect.

According to a fourth aspect there is provided a method of tuning a control logic of a controller configured to control a power converter based on the control logic, the power converter forming part of an electrical system further comprising: a filter having a cutoff frequency; a load and a DC power supply network, wherein the active power converter, the filter and the load are electrically couped to the DC power supply network, and wherein the method comprises: adjusting a gain of the control logic to reduce voltage oscillations on the DC power supply network caused by the load below the cutoff frequency of the filter. The electrical system may have any of the features of the electrical system of the first aspect.

The gain of the control logic may be a first gain. The method may comprise:
adjusting the first gain and a second gain of the control logic based on (e.g., to target):
   an average error between a monitored voltage on the DC power supply network and a voltage setpoint for the DC power supply network, and/or
   a rise time for the monitored voltage; and subsequently
adjusting the first gain of the control logic to reduce voltage oscillations on the DC power supply network caused by the load below the cutoff frequency of the filter.

It may be that the method comprises adjusting the gain (e.g., the first gain) of the control logic to reduce voltage oscillations on the DC power supply network caused by the load up to (e.g., up to and including) the cutoff frequency of the filter.

It may be that the control logic includes a proportional gain and an integral gain. It may be that adjusting the gain (e.g., the first gain) of the control logic includes increasing a magnitude of the integral gain relative to a magnitude of the proportional gain. It may be that adjusting the gain of the control logic includes increasing a magnitude (e.g., an absolute magnitude) of the integral gain.

According to a fifth aspect there is provided a controller, a power converter and/or an electrical system obtainable (e.g., obtained) by the method of the fourth aspect.

### BRIEF DESCRIPTION OF THE DRAWINGS

**FIG. 1** shows an example vehicle comprising a transport refrigeration system;
**FIG. 2** is a diagram which shows an example electrical system suitable for use with the transport refrigeration system of FIG. 1, the electrical system comprising a power converter and a filter;
**FIG. 3** is a block diagram of a control logic executed/performed by the power converter for FIG. 2;
**FIG. 4** is a graph which shows Bode plots of a frequency response of the filter and the power converter of the electrical system of FIG. 2; and
**FIG. 5** is a flowchart which shows an example method of tuning the control logic of FIG. 3.

### DETAILED DESCRIPTION OF THE INVENTION

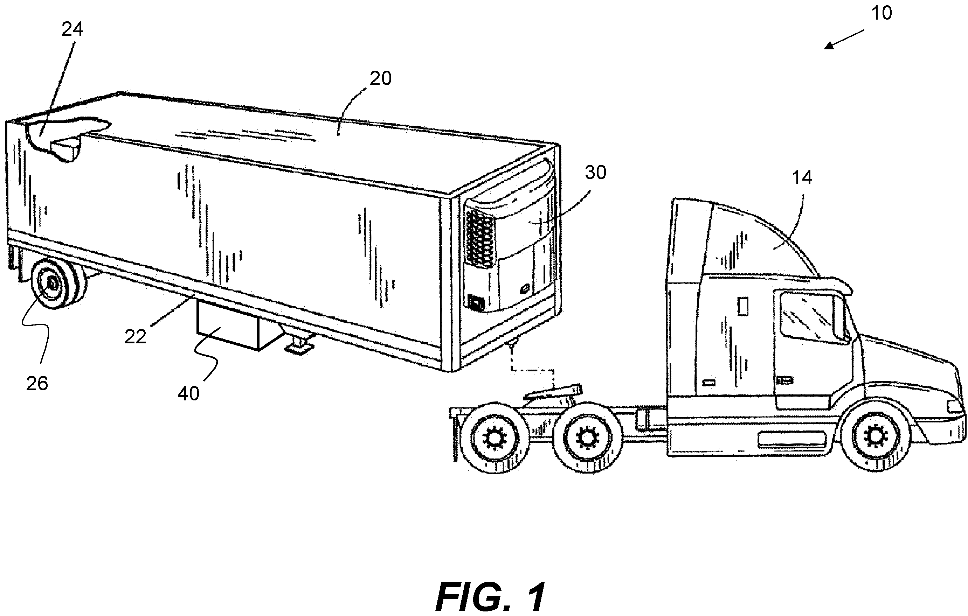

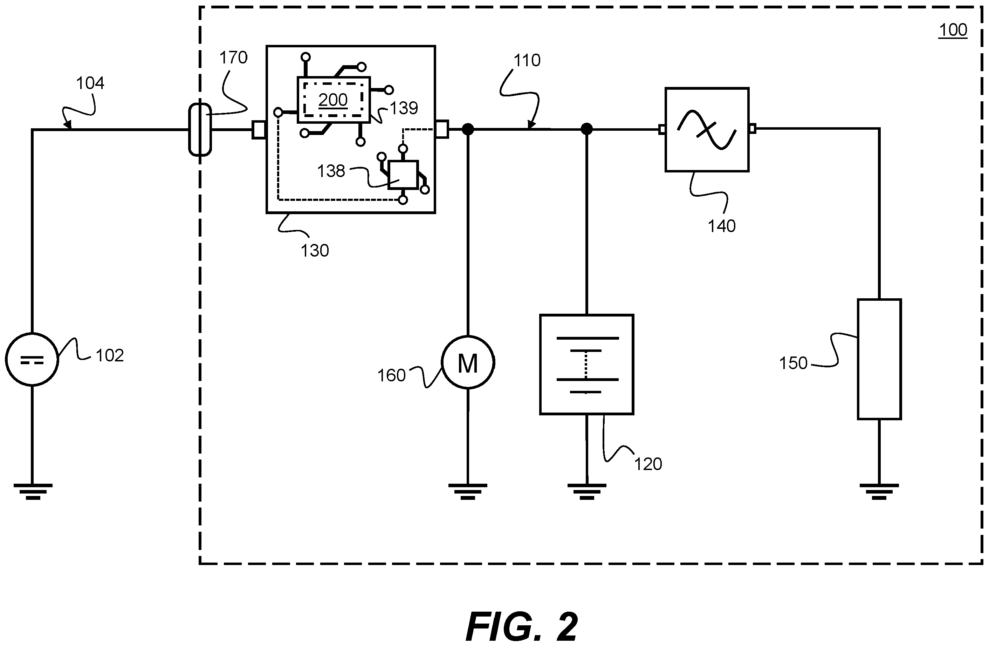

**FIG. 1** shows a vehicle 10 comprising a transport refrigeration system 20. In the example of FIG. 1, the transport refrigeration system 20 forms a part of an over-the-road refrigerated semi-trailer having a structure 22 supporting (or forming) a at least one climate-controlled compartment 24 which is configured to be cooled and/or heated by a TRU 30. The structure 22 includes a chassis. The structure 22 supports the TRU 30 and an under-chassis box 40. The vehicle 10 further comprises a tractor unit 14 removably couplable to the trailer. The vehicle 10 comprises at least an axle 26, to which an electrical generator as described below with reference to FIG. 2 may be mechanically coupled. Although the axle 26 is shown as being provided as part of the over-the-road refrigerated semi-trailer in the example of FIG. 1, this need not be the case. For instance, it may be that the axle 26 is provided as part of the tractor unit 14. The TRU 30 comprises a vapour-compression system which is configured to provide cooling and/or heating to the climate-controller compartment 24, as will be appreciated by those skilled in the art. The TRU 30 also comprises a prime mover (e.g., an internal combustion engine) for powering operation of the vapour-compression system.

**FIG. 2** shows a diagram of an example electrical system 100 suitable for use with (e.g., to be incorporated within) a vehicle 10 including a transport refrigeration system 20 as shown by FIG. 1. Accordingly, the electrical system 100 is generally configured for use in a vehicle and is referred to herein as a vehicle electrical system 100. More specifically, one or more components of the vehicle electrical system 100 may be disposed in the under-chassis box 40 of the TRU 30 of the vehicle 10 shown by FIG. 1.

The vehicle electrical system 100 comprises a DC power supply network 110, an energy storage device 120, an active power converter 130, a filter 140, a load 150, a starter motor 160 and a port 170. The port 170 is configured to be coupled to an external cable 104 In the example of FIG. 2, the energy storage device 120 comprises one or more batteries (e.g., one or more cold cranking amp, CCA, batteries).

The energy storage device 120, a side of the active power converter 130, a side of the filter 140 and the starter motor 160 are coupled to the DC power supply network 110. The load 150 is coupled to the other side of the filter 140 while the port 170 is coupled to the other side of the active power converter 130. Accordingly, the load 150 is coupled to the DC power supply network 110 via the filter 140 and the active power converter 130 is coupled between the port 170 and the DC power supply network 110. The load 150 may be, for instance, an engine electronic control unit or a fuel pump for the prime mover of the TRU 30. Additional loads/sources may also be connected to the DC power supply network 110, for example an engine heater (i.e., for heating the prime mover of the TRU 30) and/or a solar panel array. Such additional loads may cause (e.g., draw) relatively low (e.g., negligible) ripple current(s) (and thus may be described as relatively "linear").

The filter 140 is a passive filter. As will be appreciated by those skilled in the art, a passive filter is an electronic circuit that uses passive components to attenuate selected frequencies from a signal (i.e., a voltage signal). Unlike an active filter, a passive filter does not require an external power source. As will also be appreciated by those skill in the art, the passive filter 140 may comprise a combination of at least one resistor and at least one capacitor or a combination of at least one inductor and at least one capacitor (each of which are passive components) arranged in an RC circuit or an LC circuit as appropriate. The filter is a low-pass filter or a band-rejection filter (also known as a bandstop filter, which may be formed of a combination of a low-pass filter and a high-pass filter). By definition of the terms "low-pass" and "band-rejection" in the relevant art, the filter 140 has a cutoff frequency above which the filter 140 is configured to attenuate voltage oscillations by at least 3 decibels. Because the filter 140 is coupled to the DC power supply network 110, the filter 140 is configured to configured to attenuate voltage oscillations on the DC power supply network 110 above the cutoff frequency by at least 3 decibels.

In the example of FIG. 2, the active power converter 130 is a DC-DC converter 130. In use, the active power converter 130 converts between a DC voltage provided by the power supply 102 (which may be referred to as a first voltage magnitude) and a Dc voltage for supply to the DC power supply network 110 (which may be referred to as a second voltage magnitude). The present disclosure, however, anticipates the active power converter 130 being an AC-DC converter 130. If so, the active power converter 130 converts between an AC voltage provided by the power supply 102 and the Dc voltage for supply to the DC power supply network 110. In either case, the active power converter 130 acts as a controllable intermediary between the power supply 102 and the DC power supply network 110. In particular, the active power converter 130 is operable to control an amount of electrical power supplied to the DC power supply network 110 from the power supply 102 so as to regulate an operating voltage of the DC power supply network 110. The active power converter 130 may comprise one or more switches (e.g., semiconductor switches) which are controllable for this purpose (i.e., to modulate the voltage supplied to the DC power supply network 110/the second voltage magnitude and thus an amount of electrical current supplied to the DC power supply network 110 from the power supply 102). For example, as will be understood by those skilled in the art, the active power converter 130 may be of a dual active bridge type, a buck type, a boost type, a buck-boost type, or a Cuk type.

The active power converter 130 comprises a controller 139 and at least one voltage transducer 138. The controller 139 is configured to control the active power converter 130 (e.g., the one or more switches thereof) based on a control logic 300. The at least one voltage transducer 138 is configured to monitor a present voltage of the DC power supply network 110. The at least one voltage transducer 138 is communicatively coupled to the controller 139 such that the controller 139 receives a signal from the at least one voltage transducer corresponding to a monitored voltage *Vm* on (e.g., of) the DC power supply network 110.

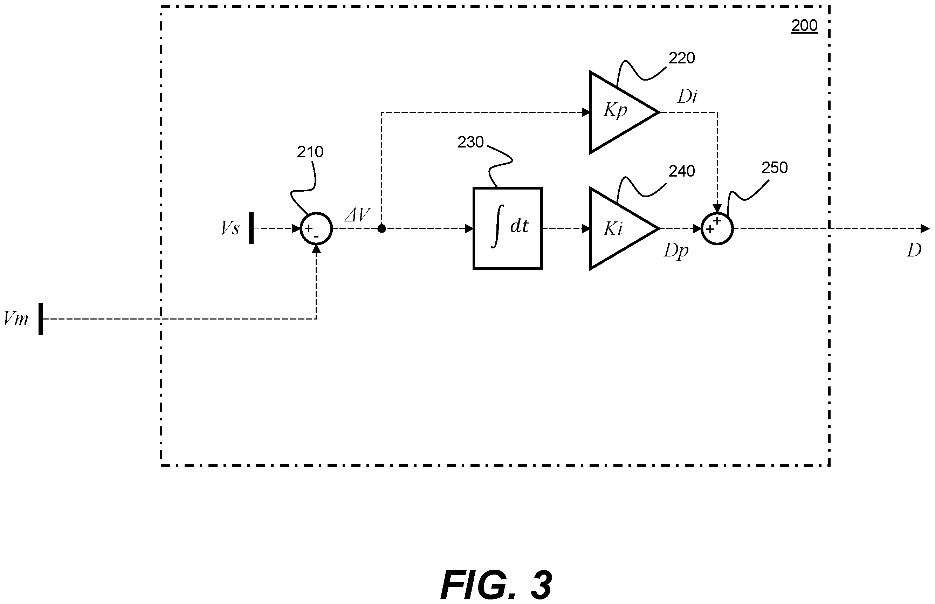

**FIG. 3** is a schematic diagram showing a detailed block diagram of the control logic 200 of (e.g., performed/executed by) the controller 139. The control logic 200 includes an action of determining, at block 210, a voltage error *ΔV*. The voltage error *ΔV* is determined as being a difference between the monitored voltage *Vm* (which is determined based on the signal received from the voltage transducer 138, as discussed above) and a voltage setpoint *Vs*.

The voltage setpoint is a value with respect to which the operating voltage of the DC power supply network 110 is to be regulated by the active power converter 130 (e.g., a target voltage for the operating voltage of the DC power supply network 110). The voltage setpoint *Vs* may be a predetermined value stored within a memory of the controller 139 or may be received from an external data processing apparatus, such as a user-interface or a machine-interface to the controller 139 and/or the vehicle electrical system 100. The voltage setpoint *Vs* may be around 12 volts.

The control logic 200 includes a proportional-integral (PI) action, represented by blocks 220, 230, 240 and 250, for determining a control variable for the power converter 130. In the example of FIG. 2, the control variable is a duty cycle, *D*, of one or more switches of the power converter 130. The PI action is carried out with the intention of reducing the voltage error *ΔV* (ideally to zero). To this end, the control logic 200 therefore comprises both a proportional gain *Kp* and an integral gain *Ki.* Hence the control logic 200 is thus referrable to as a PI control logic 200.

The application of the proportional gain *Kp* to the voltage error *ΔV* to produce a proportional control variable term *Dp* is represented by block 220. The time-integration of the voltage error *ΔV* and the subsequent application of the integral gain *Ki* to produce an integral control variable term *Di* is represented by blocks 230 and 240, respectively. The control logic then includes an action of adding (e.g., summing) the proportional control variable term *Dp* and the integral control variable term *Di,* as represented by block 250, to produce the control variable, *D*. Those skilled in the art will appreciate that the units of the gains *Kp, Ki* are defined so as to provide appropriate conversion between the voltage error *ΔV* (i.e., volts) and the respective control variable term *Dp, Di* (i.e., dimensionless).

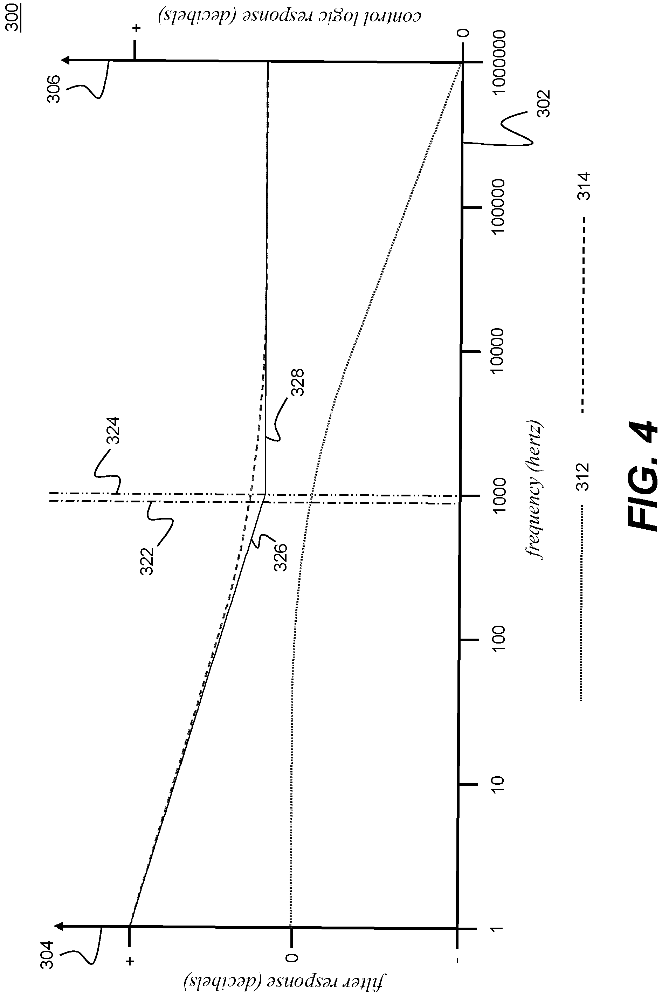

**FIG. 4** is a graph 300 which shows respective Bode plots of a frequency response of the filter 140 and the power converter 130 of the electrical system 100 of FIG. 2. In the example of FIG. 4, the filter 140 is illustrated as being a low-pass filter 140. However, it will be appreciated that the principles described herein are equally applicable to band-rejection filters (and a cutoff frequency thereof). The graph defines a logarithmic x-axis 302 corresponding to frequency (with units of hertz), a first y-axis 504 corresponding to a response of the low-pass filter 140 (with units of decibels) and a second y-axis corresponding to a response of the control logic 200 of the power converter 130 (also with units of decibels). A profile of the response of the low-pass filter 140 is represented by fine-dashed line 312 whereas a profile of the response of the control logic 200 of the power converter 130 is represented by coarse-dashed line 314. It will be appreciated that the profiles shown by FIG. 4 are idealised and intended for explanatory purposes rather than being representative of real-world conditions or data.

The profile 312 of the frequency response of the low-pass filter 140 shows the low-pass filter 140 acting to reduce voltage oscillations on the DC power supply network 110 above the cutoff frequency 322 by at least 3 decibels. Below the cutoff frequency 322, the low-pass filter acts 140 to reduce voltage oscillations on the DC power supply network 110 by no more than 3 decibels (and, at very low frequencies, the low-pass filter 140 does not substantially reduce voltage oscillations on the DC power supply network 110).

The profile 314 of the frequency response of the control logic 200 is defined by two asymptotes: a low-frequency asymptote 326 and a high-frequency asymptote 328. The low-frequency asymptote 326 is linear with a negative non-zero gradient (when plotted on a logarithmic x-axis 302, as in FIG. 4) while the high-frequency asymptote 328 is linear with a zero gradient (and is therefore horizontal). The low-frequency asymptote dominates the characteristics of the frequency response of the control logic 200 at relatively low frequencies whereas the high-frequency asymptote dominates the characteristics of the frequency response of the control logic 200 at relatively high frequencies. A corner frequency 324 of the control logic 300 is defined as a frequency at which the two asymptotes 326, 328 meet. Accordingly, the corner frequency 324 of the control logic 200 separates the frequency ranges in which the low-frequency asymptote 326 and the high-frequency asymptote 328 dominate the characteristics of the response of the control logic 200, respectively.

The profiles 312, 314 of the frequency responses of the low-pass filter 140 and the control logic 200 cooperate to reduce voltage oscillations on the DC power supply network 110 across a broad range of frequencies. Specifically, the control logic 200 is tuned to substantially mitigate voltage oscillations on the DC power supply network 110 up to and including the cutoff frequency 322 of the low-pass filter 140 such that the power converter 130 and the low-pass filter 140 cooperate to function as a hybrid filter for mitigating an effect of voltage oscillations on the DC power supply network 110. To this end, the control logic 200 is tuned so that the corner frequency 324 thereof is equal to or greater than the cutoff frequency 322 of the low-pass filter 140. During operation, voltage oscillations on the DC power supply network 110 may be caused by the load 150 (e.g., due to a non-constant power draw of the load 150 from the DC power supply network 110). Such oscillations may result in micro-cycling and/or long term walk-down of the energy storage device 200.

The magnitude of the integral gain *Ki* of the control logic 200 determines, at least in part, the value of the corner frequency 324. Therefore, by adjusting the magnitude of the integral gain *Ki* relative to the magnitude of the proportional gain *Kp,* the corner frequency 324 of the control logic 200 may be varied. In the example of FIG. 4, the corner frequency 324 of the control logic 200 is approximately 1000 hertz. Also in the example of FIG. 4, the cutoff frequency 322 of the filter 140 is approximately 900 hertz.

Optionally, the cutoff frequency 322 is at least 50 hertz or at least 300 hertz. The cutoff frequency 322 being relatively high (e.g., at least 50 hertz or at least 300 hertz) ensures that a low-complexity and/or low weight filter 140 may be used within the electrical system 100.

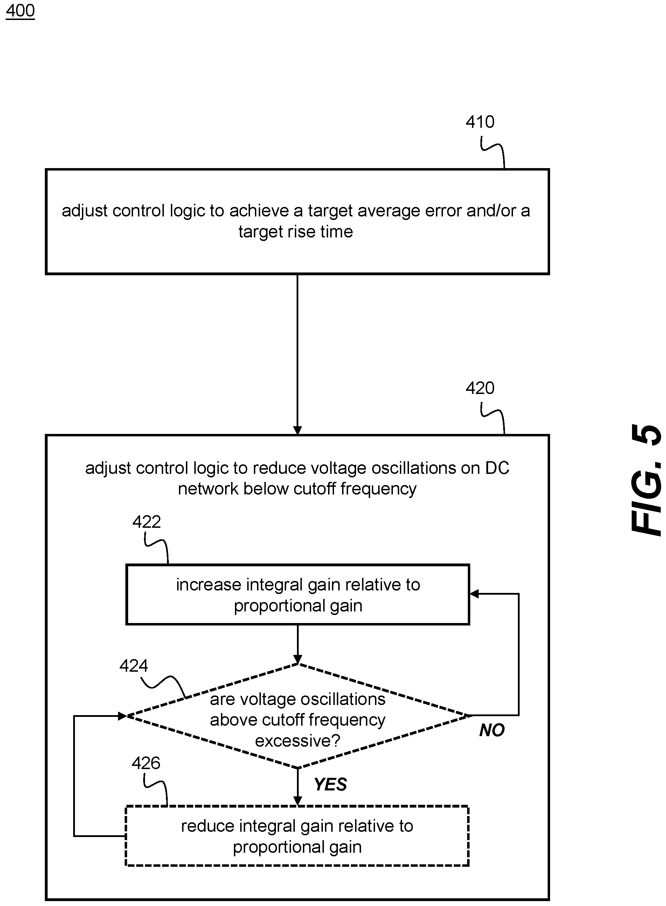

**FIG.** 5 is a flowchart which shows an example method 400 of tuning the control logic 200 of the power converter 130.

The method includes, at block 410, an action of adjusting the gains *Kp, Ki* of the control logic 200 for the power converter 130 so that an average (e.g., a root mean square average) error between the monitored voltage *Vm* and the voltage setpoint *Vs* is made acceptably small (e.g., a target average error between the monitored voltage *Vm* and the voltage setpoint *Vs* is met/achieved) and a rise time for the monitored voltage *Vm* is made acceptably short (e.g., a target rise time for the monitored voltage *Vm* is met/achieved). Appropriate strategies for adjusting the gains *Kp, Ki* of the control logic 200 for the power converter 130 to achieve these targets will be apparent to those skilled in the art, and may include a strategy in accordance with the Ziegler-Nichols method.

The method also includes, at block 420, an action of adjusting at least one of the gains *Kp, Ki* of the power converter 130 so as to substantially mitigate voltage oscillations on the DC power supply network 110 caused by the load 150 up to and including the cutoff frequency 322 of the filter 140. The action represented by block 420 is carried out chronologically subsequent to the action represented by block 410.

The action of adjusting at least one of the gains *Kp, Ki* at block 420 includes, at block 422, an action of increasing the magnitude of the integral gain *Ki* relative to the magnitude of the proportional gain *Kp* (e.g., in relative terms) by a first increment. This may include increasing the magnitude of the integral gain *Ki* in absolute terms by the first increment. The first increment may be a first predetermined increment.

The increase in the magnitude of the integral gain *Ki* may result in increased high-frequency oscillatory behaviour of the control logic 200 (e.g., an increase relative high frequency oscillations in the monitored voltage *Vm*). Accordingly, the action of adjusting at least one of the gains *Kp, Ki* at block 420 may further include, at block 424, an action of determining whether voltage oscillations on the DC power supply network 110 (e.g., oscillations in the monitored voltage *Vm*) above the cutoff frequency 322 of the filter 140 are excessive or not.

If it is determined, at block 424, that voltage oscillations on the DC power supply network 110 above the cutoff frequency 322 of the filter 140 are not excessive, the action of adjusting at least one of the gains *Kp, Ki* at block 420 includes returning to, at block 422, the action of increasing the magnitude of the integral gain *Ki* by the first increment and continuing thereafter as described herein.

If it is alternatively determined, at block 424, that voltage oscillations on the DC power supply network 110 above the cutoff frequency 322 of the filter 140 are excessive, the action of adjusting at least one of the gains *Kp, Ki* at block 420 includes proceeding to, at block 426, an action of reducing the magnitude of the integral gain *Ki* by a second increment. The second increment is smaller than the first increment and may be a second predetermined increment. Therefore, as a result of the serial execution of the actions represented by blocks 422 and 246, the magnitude of the integral gain *Ki* has been subject to a net increase despite the reduction in the integral gain *Ki* at block 426. Subsequently, the action of adjusting at least one of the gains *Kp, Ki* at block 420 may return to, at block 424, the action of determining whether voltage oscillations on the DC power supply network 110 above the cutoff frequency 322 are excessive or not and continuing thereafter as described herein.

As a consequence of the execution of the actions represented by blocks 424 and 426, high-frequency oscillatory behaviour of the control logic 200 may be relatively limited despite the increase in the magnitude of the integral gain *Ki* to mitigate voltage oscillations on the DC power supply network 110 below the cutoff frequency 322.

The tuning of the control logic 200 as a result of performance of the method 400 may result in the corner frequency 324 of the control logic 200 being equal to or greater than the cutoff frequency 322 of the filter 140. However, due to the actions represented by blocks 424 and 426, the difference between the corner frequency 324 and the cutoff frequency 322 may be relatively limited (to limit high-frequency oscillatory behaviour of the control logic 200). For example, if the cutoff frequency 322 is no greater than 50 hertz or no greater than 300 hertz, the corner frequency 324 may be no more than 400 hertz greater than, or no more than 200 hertz greater than, the cutoff frequency 322.

The use of a PI control logic 200 (e.g., as opposed to a PID control logic) provides effective means for controlling the power converter 130 while enabling relatively easy tuning for the purposes described herein. However, the disclosure envisages the use of other types of control logics (e.g., a PID control logic).

Electrical systems in accordance with the present disclosure provide hybrid filtering arrangements in which a filter is usable to (e.g., is used to) mitigate higher frequency voltage oscillations on a DC power supply network while lower frequency oscillations are effective mitigated by the action of an active power converter being controlled in accordance with an appropriately tuned control logic. This functional combination and cooperation reduces a ripple current to which an energy storage device (e.g., a battery) forming part of the electrical system is subject to, thereby reducing micro-cycling of and/or walk-down of the energy storage device and thus improving a lifetime and/or a reliability of the electrical system as a whole. Electrical systems in accordance with the present disclosure may also enable smaller volume and/or lower complexity passive filters to be used therein.

In addition, electrical systems in accordance with the present disclosure enable an energy storage device (e.g., a battery) to be integrated therein such that the energy storage device is readily be decouplable from other components of the electrical system (e.g., a load which causes a ripple current in use) while the energy storage device is being charged (e.g., from an external power source such as shore power). This removes a need for decoupling and/or isolation arrangements, thereby providing an architecturally simpler electrical system.

The controller(s) described herein may comprise a processor. The controller and/or the processor may comprise any suitable circuity to cause performance of the methods described herein and as illustrated in the drawings. The controller or processor may comprise: at least one application specific integrated circuit (ASIC); and/or at least one field programmable gate array (FPGA); and/or single or multi-processor architectures; and/or sequential (Von Neumann)/parallel architectures; and/or at least one programmable logic controllers (PLCs); and/or at least one microprocessor; and/or at least one microcontroller; and/or a central processing unit (CPU), to perform the methods and or stated functions for which the controller or processor is configured.

The controller or the processor may comprise or be in communication with one or more memories that store that data described herein, and/or that store machine readable instructions (e.g., software) for performing the processes and functions described herein (e.g., determinations of parameters and execution of control routines). The memory may be any suitable non-transitory computer readable storage medium, data storage device or devices, and may comprise a hard disk and/or solid state memory (such as flash memory). In some examples, the computer readable instructions may be transferred to the memory via a wireless signal or via a wired signal. The memory may be permanent non-removable memory or may be removable memory (such as a universal serial bus (USB) flash drive). The memory may store a computer program comprising computer readable instructions that, when read by a processor or controller, causes performance of the methods described herein, and/or as illustrated in the Figures. The computer program may be software or firmware or be a combination of software and firmware.

Except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

## Claims

1. An electrical system (100) comprising: an active power converter (130); a filter (140) having a cutoff frequency (322); a DC power supply network (110); and a controller (139) configured to control the active power converter based on a control logic (200) having a corner frequency (324); wherein:
the active power converter and the filter are electrically couped to the DC power supply network; and
the corner frequency is equal to or greater than the cutoff frequency.

2. The electrical system (100) of claim 1, wherein the cutoff frequency (322) is at least 50 hertz.

3. The electrical system (100) of claim 2, wherein the cutoff frequency (322) is at least 300 hertz.

4. The electrical system (100) of any preceding claim, wherein the control logic (200) includes a proportional gain (*Kp*) and an integral gain (*Ki*)*.*

5. The electrical system (100) of any preceding claim, further comprising a port (170) configured to be coupled to an external cable (104), and wherein the active power converter (130) is coupled between the port and the DC power supply network (110).

6. The electrical system (100) of any preceding claim, further comprising a load (150), and wherein the load is coupled to the DC power supply network (110) via the filter (140).

7. The electrical system (100) of any preceding claim, further comprising a starter motor (160) for a prime mover, and wherein the starter motor is coupled to the DC power supply network (110).

8. The electrical system (100) of claim 7, further comprising an energy storage device (120) electrically coupled to the DC power supply network (110).

9. The electrical system (100) of claim 8, wherein the energy storage device (120) includes a battery.

10. The electrical system (100) of any preceding claim, wherein the filter (140) is a passive filter.

11. A transport refrigeration system (20) comprising the electrical system (100) of any preceding claim.

12. A vehicle (10) comprising the electrical system (100) of any of claims 1 to 10 or the transport refrigeration system (20) of claim 11.

13. A method (400) of tuning a control logic (200) of a controller (139) configured to control a power converter (130) based on the control logic, the power converter forming part of an electrical system (100) further comprising: a filter (140) having a cutoff frequency (322); a load (150) and a DC power supply network (100), wherein the active power converter, the filter and the load are electrically couped to the DC power supply network, and wherein the method comprises:
adjusting (420) a gain (*Kp*, *Ki*) of the control logic to reduce voltage oscillations on the DC power supply network caused by the load below the cutoff frequency of the filter.

14. The method (400) of claim 13, wherein the control logic includes a proportional gain (Kp) and an integral gain (*Ki*), and wherein adjusting (420) the gain of the control logic includes increasing (424) a magnitude of the integral gain relative to a magnitude of the proportional gain.

15. The method (400) of claim 14, wherein adjusting (420) the gain of the control logic includes increasing (424) a magnitude of the integral gain (*Ki*).

## Amended claims

### Amended claims in accordance with Rule 137(2) EPC.

1. An electrical system (100) comprising: an active power converter (130); a filter (140) having a cutoff frequency (322); a DC power supply network (110); and a controller (139) configured to control the active power converter based on a control logic (200) having a corner frequency (324); **characterised in that**:
the active power converter and the filter are electrically couped to the DC power supply network;
the filter is configured to attenuate voltage oscillations on the DC power supply network above the cutoff frequency by at least 3 decibels; and
the corner frequency is equal to or greater than the cutoff frequency.

2. The electrical system (100) of claim 1, wherein the cutoff frequency (322) is at least 50 hertz.

3. The electrical system (100) of claim 2, wherein the cutoff frequency (322) is at least 300 hertz.

4. The electrical system (100) of any preceding claim, wherein the control logic (200) includes a proportional gain (*Kp*) and an integral gain (*Ki*)*.*

5. The electrical system (100) of any preceding claim, further comprising a port (170) configured to be coupled to an external cable (104), and wherein the active power converter (130) is coupled between the port and the DC power supply network (110).

6. The electrical system (100) of any preceding claim, further comprising a load (150), and wherein the load is coupled to the DC power supply network (110) via the filter (140).

7. The electrical system (100) of any preceding claim, further comprising a starter motor (160) for a prime mover, and wherein the starter motor is coupled to the DC power supply network (110).

8. The electrical system (100) of claim 7, further comprising an energy storage device (120) electrically coupled to the DC power supply network (110).

9. The electrical system (100) of claim 8, wherein the energy storage device (120) includes a battery.

10. The electrical system (100) of any preceding claim, wherein the filter (140) is a passive filter.

11. A transport refrigeration system (20) comprising the electrical system (100) of any preceding claim.

12. A vehicle (10) comprising the electrical system (100) of any of claims 1 to 10 or the transport refrigeration system (20) of claim 11.

13. A method (400) of tuning a control logic (200) of a controller (139) configured to control a power converter (130) based on the control logic, the power converter forming part of an electrical system (100) further comprising: a filter (140) having a cutoff frequency (322); a load (150) and a DC power supply network (100), **characterised in that**: the active power converter, the filter and the load are electrically couped to the DC power supply network; the filter is configured to attenuate voltage oscillations on the DC power supply network above the cutoff frequency by at least 3 decibels; and the method comprises:
adjusting (420) a gain (*Kp, Ki*) of the control logic to reduce voltage oscillations on the DC power supply network caused by the load below the cutoff frequency of the filter.

14. The method (400) of claim 13, wherein the control logic includes a proportional gain (Kp) and an integral gain (*Ki*), and wherein adjusting (420) the gain of the control logic includes increasing (424) a magnitude of the integral gain relative to a magnitude of the proportional gain.

15. The method (400) of claim 14, wherein adjusting (420) the gain of the control logic includes increasing (424) a magnitude of the integral gain (*Ki*)*.*
